# EUROPEAN PATENT APPLICATION

(11) **EP 4 484 660 A1**
(43) Date of publication of application: **01.01.2025**
(21) Application number: 23461616.7
(22) Date of filing: 30.06.2023
(51) Int. Cl.: E03D 5/02, F16K 7/10, F16L 55/124

(54) **FLUSH VALVE**

(71) Applicant: B/E Aerospace, Inc., Winston-Salem, NC 27105 (US)
(72) Inventor: SWIRNIAK, Pawel, 51-317 Wroclaw (PL); KROCZEK, Piotr Jacek, 51-317 Wroclaw (PL); PAWLUCKI, Mateusz, 50-330 Wroclaw (PL)
(74) Representative: Dehns

(57) **Abstract**

A flush valve comprising: a valve housing (30) defining a fluid flow channel (32) between an inlet end and an outlet end; a valve closure member arranged to open and close the fluid flow channel; and a mounting unit (38) attached to the valve housing at a location intermediate the first and second ends to which the valve closure member is mounted; wherein: the valve closure member is an inflatable valve member (36) mounted to the mounting unit (38) such that, when in an inflated state, the valve member extends across the fluid flow channel to prevent flow of fluid past the valve member from the first end to the second end and, when in a deflated state, the valve member does not prevent flow of fluid through the fluid flow channel from the first end to the second end.

## Description

### TECHNICAL FIELD

The present disclosure is concerned with a flush valve in a vacuum toilet.

### BACKGROUND

Vacuum toilets find use in a number of areas, including in vehicles such as aircraft, trains, ships etc. In such toilets, waste is removed from the toilet bowl by means of a vacuum that draws the waste into a waste line leading to a waste tank or other disposal location. Vacuum toilets use a flush plate valve comprising a moveable plate between the toilet bowl and the waste line, the plate being moved between a closed position where it blocks flow from the bowl to the waste line, and an open position where a flow path is provided from the bowl to the waste line, so that waste can be suctioned from the bowl into the waste line. A known flush valve has a plate that is rotated about a mounting point, by an electric motor, via a gear mechanism, from the open (flushing) position to the closed position. It is important to know the position of the flush valve plate. It is important that there is a tight fit between the valve plate and the outlet when the valve is closed. To ensure this, at the very least, the motor and flush control systems need to know whether the plate is in the open or the closed position. Conventionally, this has been monitored by means of various types of switches. It is preferably, however, to be able to more accurately detect the position of the plate not only at the open and closed positions, but also between those positions. Some vacuum flush valves use potentiometers to detect the plate position from the gear mechanism position and to cause the motor to start/stop based on the detected position. The position of the potentiometer must, however, be accurately tuned, for each assembly, at the time of assembly, which adds to the manufacture time of the flush valve and the tuning can, if slightly inaccurate, lead to problems during use. Inaccuracies can lead to the valve not closing fully or, alternatively, trying to close further after it is actually fully closed, which can cause damage and/or propagate position errors.

It would be desirable to have a flush valve in which accurate position detection and control of the valve member is not required in order to ensure valve tightness.

### SUMMARY

The present disclosure provides a flush valve comprising: a valve housing defining a fluid flow channel between an inlet end and an outlet end; a valve closure member arranged to open and close the fluid flow channel; and a mounting unit attached to the valve housing at a location intermediate the first and second ends to which the valve closure member is mounted; wherein: the valve closure member is an inflatable valve member mounted to the mounting unit such that, when in an inflated state, the valve member extends across the fluid flow channel to prevent flow of fluid past the valve member from the first end to the second end and, when in a deflated state, the valve member does not prevent flow of fluid through the fluid flow channel from the first end to the second end.

A vacuum toilet with such a flush valve is also provided.

### BRIEF DESCRIPTION

Examples of the flush valve assembly according to this disclosure will now be described with reference to the drawings. It should be noted that these are examples only and variations are possible within the scope of the claims.
Figure 1 shows a conventional flush valve assembly in a vacuum toilet.
Figure 2 shows a flush valve assembly according to the disclosure, in a vacuum toilet
Figure 3 is a cross-section of a part of the arrangement of Fig. 3, having a flush valve according to the disclosure.
Figure 4 shows a sectional view of a flush valve assembly according to the disclosure.
Figures 5A, 5B and 5C are shown to illustrate the operation of a flush valve assembly according to the disclosure.
Figure 6 shows a valve member of a flush valve according to the disclosure.

### DETAILED DESCRIPTION

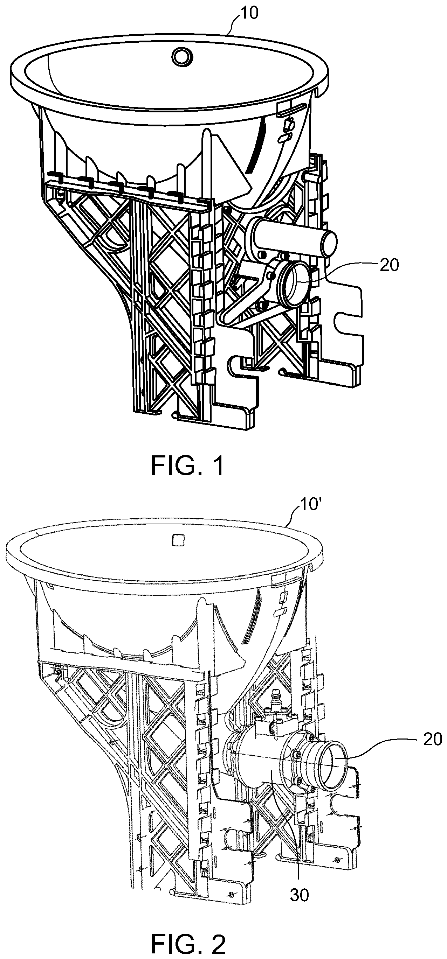

A typical flush valve arrangement will be described first with reference to Fig. 1. The valve is, in use, to be arranged between a toilet bowl 10 and a waste pipe (not shown in Fig. 1). The valve has a valve housing 1 for mounting the valve in position, and a port 2 which, when the valve is mounted in position, will be located between a drain outlet of the toilet bowl and the waste or sewage line leading to a waste tank or the like. During flushing, waste is suctioned from the toilet bowl, through the port 2 into the waste line. Neither the toilet bowl nor the waste line are described further here, since the use and location of such a flush valve is known to those skilled in the art. Typically, the valve includes a movable valve member such as a plate (not shown) which is arranged to rotate or pivot relative to the housing 1 and the port 2 between an open position in which the plate does not cover the port, to allow waste to flow from the bowl to the waste line through the port during flushing, to a closed position in which the plate covers the port 2 to prevent flow of waste from the bowl to the waste line. The valve member (plate) is provided with seals (e.g. face seals. That seal against the port when the valve is properly closed. In the example shown, the port is circular and the plate may have a corresponding shape such that in the closed position, it fully covers the port and in the fully open position, it does not overlap with the port. In such examples, therefore, the rounded part of the plate is ideally the same shape, but slightly larger than the port, having an attachment portion where the plate is fastened to the housing at the pivot point. Other types of valve having a moveable valve member driven, by a motor (and/or manually operated) to open and close relative to the port.

To ensure accurate operation of the motor to drive and precisely position the valve, so that the valve is tightly sealed to the port in the closed position, it is important to accurately and reliably detect the position of the valve member e.g. the plate, relative to the port.

In conventional arrangements such as shown in Fig. 1, a potentiometer may be used to detect rotation of gears as an indication of the position of the plate rotated by the gears. The potentiometer, or other position sensor, sends a signal to the motor controller (not shown) to control the motor to stop/start based on the detected position of the valve member.

Even with such position detectors, however, there is a change of positioning error such that the valve member does not properly seal to the port when it is supposed to be closed, and gaps may result where debris, ice etc. can accumulate.

The flush valve assembly of the present disclosure provides alternatives to such plate valve and similar providing a valve member that provides reliable sealing when the valve is closed without the need for position detecting mechanisms and without the risk of gaps forming between the valve and the port. Examples will be described with reference to Figs. 2 to 6.

The valve assembly of the disclosure includes a valve housing 30 configured to be positioned, in use, between a waste outlet 12 of a toilet bowl 10' and a waste line 20. The housing 30 defines a flow channel 32 for waste from the toilet bowl 10', via the outlet 12, to the waste line 20 when the valve is open. In use, the valve housing 30 may be secured to the bowl outlet 12, at one end, and to the waste line 20 at its other end via fasteners such as screws 34, nuts and bolts, clips or other fasteners.

The valve member for opening and closing the valve is in the form of an inflatable balloon 36 as will be described further below. A balloon mounting unit 38 is mounted to the valve housing 30, the mounting unit having a first end 38a attached to the valve housing 30, and a second, opposite end 38b having a port 39 arranged to be connected to a source of pressure e.g. to a source of pressurized gas or air or fluid e.g. water. The valve housing and the mounting unit having aligned openings 301, 381 to form a balloon passage 37 from the mounting unit to the flow channel 32. A balloon cavity 40 may be defined within the mounting unit 38 as a receptacle for the balloon when in its folded or deflated state as described further below.

The balloon can be made of any material suitable for use in a waste water system but should be robust and resistant to damage from water, ice or debris. The balloon may be formed, for example, of a rubber, silicone or elastomeric material.

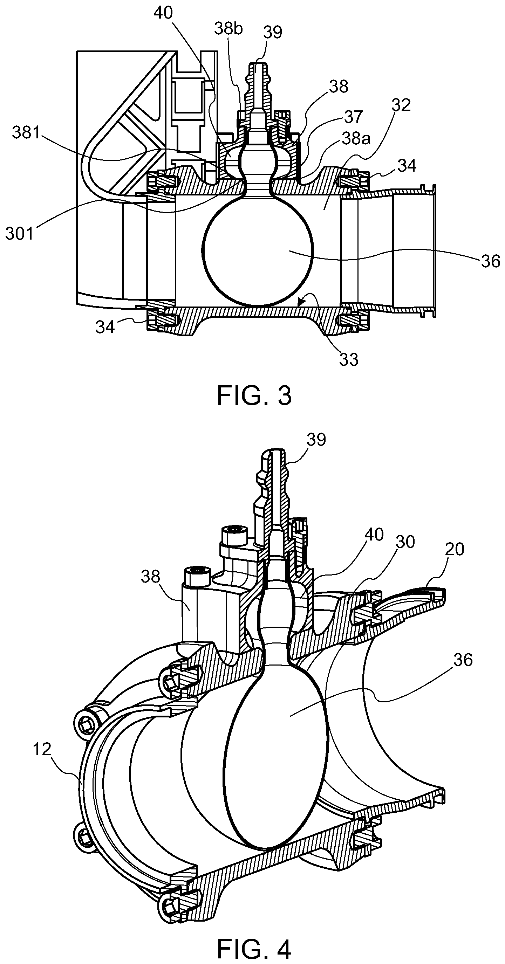

Figures 3 and 4 show an example of the valve according to the disclosure with the balloon in its inflated state in which it is configured to extend right across the diameter of the flow channel 32 to seal the flow channel, preventing fluid flow past the balloon from the toilet bowl end to the waste line end of the valve housing. When the balloon is inflated, therefore, the valve is closed. The size of the balloon is selected such that when inflated it completely fills the cross-section of the valve housing and seals against the inner walls 33 of the valve housing 32.

The balloon valve member 36 is inflated by applying pressure to the balloon, attached to the port 39, from the source of pressurised fluid, through the port 39. Examples of pressurised fluid include air or water e.g. potable water.

To open the valve, the balloon 36 is deflated by connecting a vacuum or negative pressure to the port 39. When the balloon is deflated, the fluid flow channel 32 is open to fluid (waste) flowing from the toilet out end of the valve housing to the waste line end. In a simple arrangement, the balloon deflates such that it takes up less space within the fluid flow channel 32 and so fluid can flow through the valve. In an improved design, the mounting unit 38 has a cavity 40 which contains the balloon in its deflated or folded state. In this example, the balloon, in the valve open state, is completely stored out of the flow channel 32 and so present no obstruction or restriction to fluid flow.

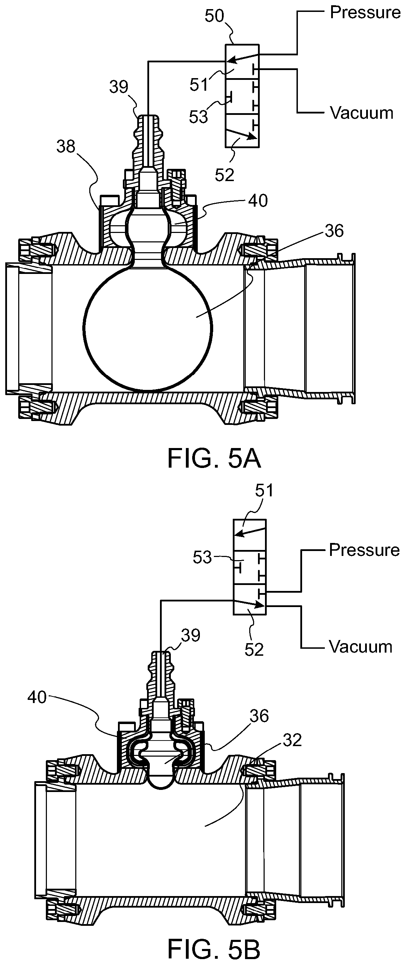

Any switch or control mechanism that provides pressure to inflate the balloon when the valve is to open and negative pressure to deflate the balloon when the valve is to open would be suitable for use with this arrangement. In one example, inflation/deflation may be by means of a solenoid actuated valve. An example is a three-position, three-way valve e.g. a pneumatic valve or a hydraulic valve according to the fluid used to inflate the balloon. For inflation, the valve would connect the port to the pressure source e.g. air (in an aircraft, this may be e.g. bleed air) or water (e.g. to a potable water source) and for deflation, the valve can switch to connect the port 39 to a waste system vacuum e.g. generated inside a waste tank. Such a valve is shown, by way of example, in Figs. 5A to 5C.

In Figs. 5A and 5B, the flush valve is shown connected via a valve (here a solenoid actuated three-way valve) 50 which can be switched, via a solenoid (not shown) between a first position 51 (shown in Fig. 5A) where the port 39 is connected to a pressure source (Pressure) and the balloon is inflated to close the valve (Fig. 5A).

When the solenoid is controlled to open the valve, it causes the valve 50 to switch to a second position 52 (Fig. 5B) where the port 39 is fluidly connected to a negative pressure of vacuum (Vacuum) to remove the air/fluid from the balloon 36 to deflate the balloon. In the example shown (Fig. 5B), in the deflated state, the balloon is folded into the cavity 40 of the mounting unit 38 and the valve is fully open.

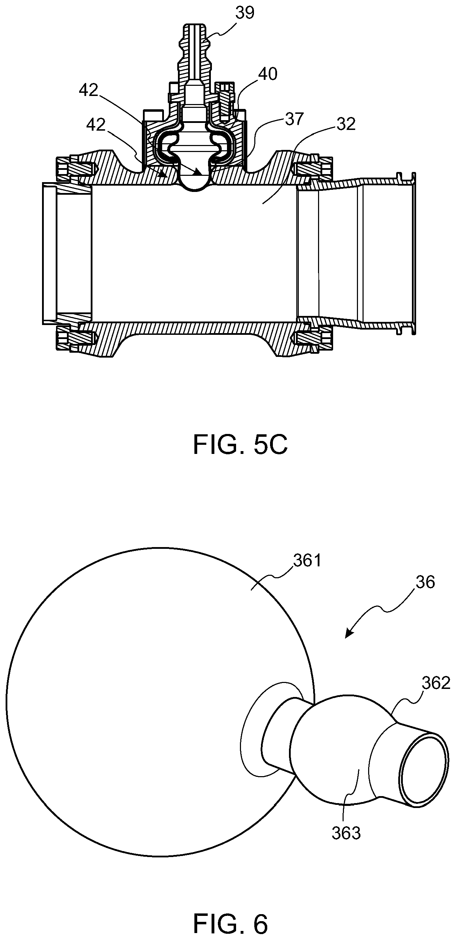

Whilst the shape and size of the balloon 36 should be selected to ensure reliable sealing when the valve is open, additional sealing can be provided at the interface between the mounting unit 38 and the flush valve housing 30 - i.e. around the balloon passage 37. In one example, shown in Fig. 5C, this can be in the form of elastomeric lips 42. These may be formed to wipe the balloon as it passes the lips on deflation, such that any debris remains in the flow channel 32.

Fig. 6 shows, in greater detail, one configuration of the balloon 36, by way of example only. The flush valve assembly of this disclosure is not limited to any particular balloon design.

In the example of Fig. 6, the balloon has a main balloon portion 361 and a neck portion 362 for attachment to the port 39. The balloon may, in some examples, be provided with selectively thickened walls to control the shape into which it will fold when deflated. Further, selective reinforcement 363 such as overmolding of material, cords or fibers may be provided to parts of the balloon e.g. where it is attached to the port, or to manage how the balloon folds. By managing fibers, the balloon can be designed to fold at precisely selected locations, and therefore, the folded shape can be controlled.

The valve assembly of this disclosure is a simple, inexpensive and robust design that provides reliable sealing of the valve in its closed position and avoids accumulation of debris, without the need for position detection mechanisms and complex control. It is able to use power sources already present in e.g. the aircraft or other environment.

## Claims

1. A flush valve comprising:
a valve housing (30) defining a fluid flow channel (32) between an inlet end and an outlet end;
a valve closure member arranged to open and close the fluid flow channel;
and a mounting unit (8) attached to the valve housing at a location intermediate the first and second ends to which the valve closure member is mounted; wherein:
the valve closure member is an inflatable valve member (36) mounted to the mounting unit (38) such that, when in an inflated state, the valve member extends across the fluid flow channel to prevent flow of fluid past the valve member from the first end to the second end and, when in a deflated state, the valve member does not prevent flow of fluid through the fluid flow channel from the first end to the second end.

2. The flush valve of claim 1, wherein the inflatable valve member is a balloon (36).

3. The flush valve of claim 1 or 2, wherein the mounting unit includes a cavity (40) in which the inflatable valve member is mounted such that when inflated, the inflatable valve member extends out of the cavity into the fluid flow channel and when deflated, the inflatable valve member is contained within the cavity (40).

4. The flush valve of any preceding claim, wherein the mounting unit (40) is provided with a port (39) arranged to be connected, in use, to a source of pressure to inflate the inflatable valve member, the inflatable valve member being mounted to the mounting unit in fluid communication with the port (39).

5. The flush valve of claim 4, wherein the port (39) is arranged to be connected, in use, to a source of negative pressure to deflate the inflatable valve member

6. The flush valve of any preceding claim, wherein the inflatable valve member is formed or a rubber, silicone or elastomeric material.

7. The flush valve of any preceding claim, further comprising a switch mechanism to connect the inflatable valve member selectably to a positive pressure for inflation and to a negative pressure for deflation.

8. The flush valve of claim 7, wherein the switch mechanism comprises a solenoid actuated valve (50).

9. The flush valve of claim 8, wherein the solenoid actuated valve is a three-way, three position valve.

10. The flush valve of any preceding claim, wherein the mounting unit is provided with sealing lips (42) to wipe the inflatable valve member as it deflates.

11. The flush valve of claim 2 or any claim dependent thereon, wherein the balloon has selectively thickened wall portions to control folding of the balloon as it deflates.

12. A vacuum toilet having:
a toilet bowl (10') and a flush valve as claimed in any preceding claim, arranged to flush waste from the toilet bowl.

13. A vacuum toilet as claimed in claim 12, further comprising a waste line (20), the flush valve connected between the toilet bowl and the waste line.
